# EUROPÄISCHE PATENTANMELDUNG

(11) **EP 1 039 729 A1**
(43) Veröffentlichungstag der Anmeldung: **27.09.2000**
(21) Anmeldenummer: 00440070.1
(22) Anmeldetag: 10.03.2000
(51) Int. Cl.: H04M 1/725

(54) **Verfahren und Schaltungsanordnung zum Anschluss eines Funktelefons an ein Telekommunikationsnetz für Festnetztelefone**

(30) Priorität: 19.03.1999 DE 19912385
(71) Anmelder: ALCATEL, 75008 Paris (FR)
(72) Erfinder: Maurer, Siegfried, 71522 Backnang (DE)
(74) Vertreter: Müller, Joachim, Dipl.-Ing.

(57) **Zusammenfassung**

Wenn ein Funktelefon (4, 9) in einer Ladestation (5, 8) abgelegt worden ist, soll die Möglichkeit geschaffen werden, einen am Funktelefon (4, 9) ankommenden Ruf zu einem Festnetztelefon (3, 7) umzuleiten. Dazu sollen handelsübliche Funktelefone (4, 9) in unveränderter Form verwendet werden können. Erfindungsgemäß wird dazu die Ladestation (5) derart modifiziert, daß beim Ablegen des Funktelefons (4) der Dienst Rufumleitung automatisch aktiviert wird. In einer weiteren Form wird die Ladestation (8) durch eine Anpassungsschaltung (8.2) ergänzt, die die von dem Funktelefon (9) gelieferten Signale in einen Ruf und eine Verbindung zu mindestens einem Festnetztelefon (7) an einer Nebenstellenanlage (6) umsetzt.

## Beschreibung

Die Erfindung betrifft ein Verfahren und eine Schaltungsanordnung mit deren Hilfe zeitweilig eine Verbindung zwischen Funktelefon und Festnetztelefon und zwischen Festnetztelefon und Funktelefon hergestellt werden kann. Die Integration der Telekommunikationsdienste verschiedener Diensteplattformen wie Festnetz, Mobilfunknetz und beispielsweise Kabel-TV-Netz wird derzeitig allgemein diskutiert und wird als Fixed Mobile Integration , kurz FMI, bezeichnet. Zu diesem Problemkreis gehören auch personenbezogene Kommunikationsdienste hoher Mobilität und Funktionalität, international als Personal Communications Services, kurz PCS, bezeichnet. So ist bereits ein Verfahren und eine Anordnung zum Anschluß von Teilnehmern in mehreren Telekommunikationsnetzen unter einer Rufnummer beschrieben worden, vgl. DE-A-197 24 122. Das Verfahren beruht darauf, daß für jeden Kunden die wesentlichen Teilnehmerdaten in einer Heimatdatenbank, Home Data Base HDB, verwaltet werden und diese Daten in mindestens einem Netz abgespeichert und auf Anfrage anderen Netzen zur Verfügung gestellt werden. Eine solche Lösung unterscheidet sich von den bestehenden Netzen und erfordert zu ihrer Realisierung erhebliche Investitionen.

Der Erfindung liegt nun die Aufgabe zugrunde, mit den Mitteln bestehender Telekommunikationsnetze und vorhandener Endgeräte einen Dienst anzugeben, mit dem eine kostengünstige automatische Rufumleitung von einem Funktelefon zu einem Festnetztelefon und bedarfsweise auch umgekehrt schnell realisiert werden kann.

Diese Aufgabe wird durch das im ersten Anspruch beschriebene Verfahren und durch die im fünften Anspruch angegebene Schaltungsanordnung gelöst.

Das Wesen der Erfindung besteht darin, daß zur Durchführung des Verfahrens bereits existierende Komponenten eines Funktelefons direkt oder in leicht abgewandelter Form verwendet werden, um einen zeitweiligen Zugriff des Funktelefons auf ein Festnetztelefon, dessen Rufnummer sich von der Rufnummer des Funktelefons unterscheidet, zu ermöglichen.

Die Erfindung wird nunmehr an einem Ausführungsbeispiel näher erläutert. In der dazugehörigen Zeichnung zeigen
- Fig. 1a, 1b: eine Darstellung einer realen Anordnung von Funktelefon und Festnetztelefon,
- Fig. 2a ... 2d: eine Darstellung der Verfahrensschritte einer Variante des erfindungsgemäßen Verfahrens,
- Fig. 3: ein Blockschaltbild einer Anordnung von Ladestation mit Funktelefon entsprechend Fig. 1 a, 1b,
- Fig. 4: ein Blockschaltbild einer Anordnung mit modifizierter Ladestation zur Durchführung des Verfahrens gemäß Fig. 2a ... d und
- Fig. 5: ein Blockschaltbild einer Anordnung mit modifizierter Ladestation zur Realisierung weiterer möglicher Dienste.

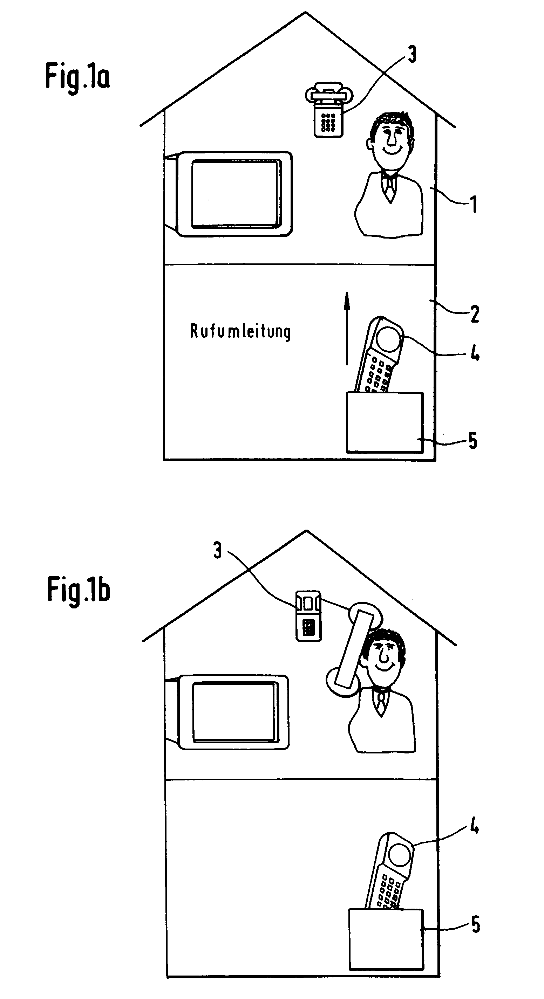

Gemäß Fig. 1a, 1b besteht die Anordnung aus einem ersten Raum 1 mit einem Festnetztelefon 3 und aus einem, von dem ersten Raum 1 örtlich getrennten, zweiten Raum 2 mit einem Funktelefon 4 und zugehöriger Ladestation 5. Wird nun das Funktelefon 4 üblicherweise in der Ladestation 5 abgelegt und der Teilnehmer befindet sich nicht in dem zweiten Raum 2, so sollen ankommende Rufe von dem Funktelefon 4 zu dem Funktelefon 3 im ersten Raum umgeleitet werden. Dazu wird die Ladestation 5 derart modifiziert, daß beim Ablegen des Funktelefons 4 in der Ladestation 5 über die üblicherweise vorhandene Datenleitung des Funktelefons 4 von der Ladestation 5 durch zwei entsprechende Kontakte eine zuvor für das Festnetztelefon 3 programmierte Rufumleitung aktiviert wird, solange sich das Funktelefon 4 in der Ladestation 5 befindet. Dieses Verfahren ist sowohl für ein einzelnes Festnetztelefon 3 anwendbar als auch für eine Nebenstellenanlage. Wird der Anruf des Funktelefons 4 bei einer Nebenstellenanlage beispielsweise auf eine spezielle Rufnummer umgeleitet, so kann dieser umgeleitete Ruf durch eine spezielle Ruftonmelodie signalisiert werden.

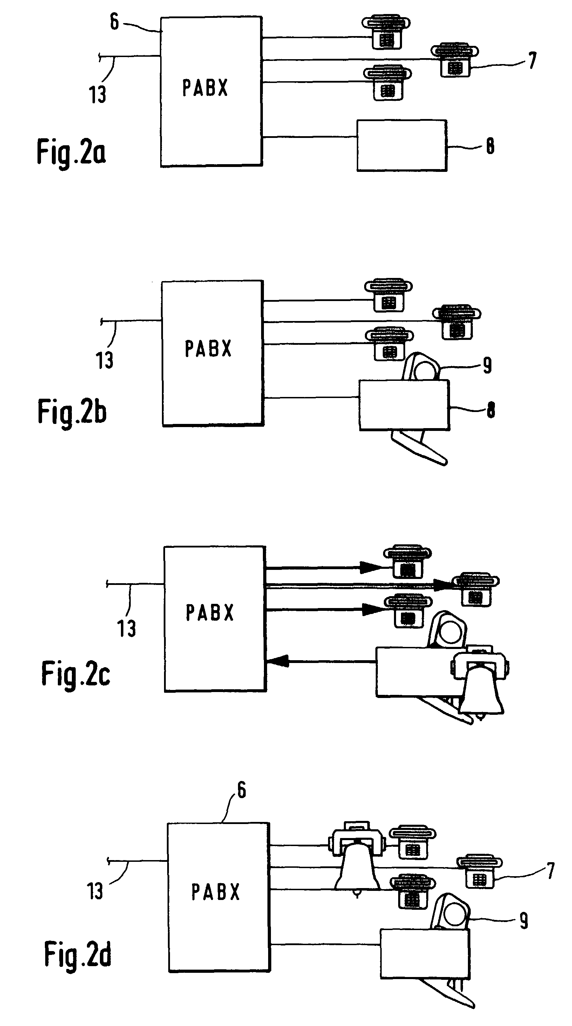

In den Fig. 2a ... 2d ist der Verfahrensablauf dargestellt für den Fall, daß der Anruf eines Funktelefons 9 von einem Festnetztelefon 7, das zu einer Nebenstellenanlage 6 mit einem Amtsanschluß 13 gehört, entgegengenommen werden soll. Als Voraussetzung dafür wird eine Ladestation 8 für das Funktelefon 9 zu einer sogenannten Interworking Unit zwischen Funktelefon 9 und Nebenstellenanlage 6 modifiziert, Fig. 2a. Wird ein Funktelefon 9 in der modifizierten Ladestation 8 abgelegt, Fig. 2b, so wird ein kommender Ruf für das Funktelefon 9 von diesem über die Freisprechschnittstelle der modifizierten Ladestation 8 signalisiert, Fig. 2c, und die modifizierte Ladestation 8 setzt den Ruf an mindestens ein Festnetztelefon 7 der Nebenstellenanlage 6 ab, Fig. 2d. Wird der Anruf von dem Festnetztelefon 7 entgegengenommen, so wird die Verbindung von dem Funktelefon 9 zu dem Festnetztelefon 7 über die Freisprechschnittstelle zusammengeschaltet.

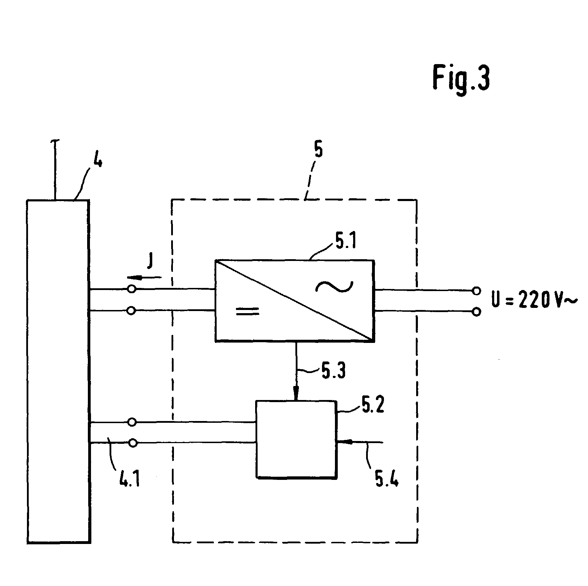

Gemäß Fig. 3 besteht eine Anordnung zur automatischen Rufumleitung aus einem Funktelefon 4 und einer Ladestation 5, die bestimmungsgemäß ein Netzteil 5.1 und zusätzlich eine einfache Logikschaltung 5.2 enthält. Bei Ablage des Funktelefons 4 wird die Logikschaltung 5.2 mit einer üblicherweise vorhandenen Datenleitung 4.1 des Funktelefons 4 verbunden. Über die Datenleitung 4.1 können die sonst von den Tasten des Funktelefons 4 ausgelösten Befehle von einem Personalcomputer oder auch über Tasten von einem Autoradio aus ferngesteuert werden. Erfindungsgemäß wird die Datenleitung 4.1 zur Aktivierung der Rufumleitung verwendet. Die automatische Rufumleitung wird über eine Leitung 5.3 zwischen Netzteil 5.1 und Logikschaltung 5.2 aktiviert, wenn ein Ladestrom I fließt. Das Ausschalten der automatischen Rufumleitung erfolgt über ein Signal 5.4, das im einfachsten Fall durch einen mechanischen Kontakt in der Ladestation 5 bei der Entnahme des Funktelefons 4 aus der Ladestation 5 ausgelöst wird.

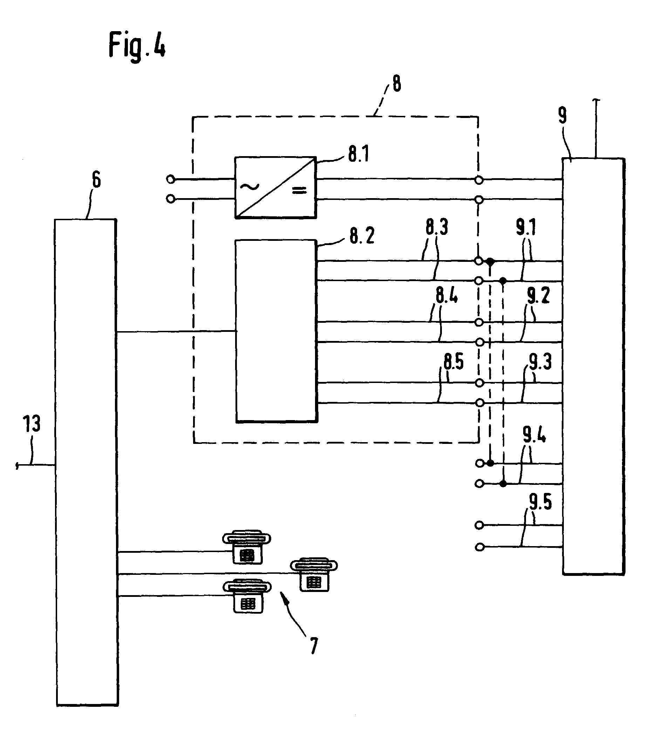

Entsprechend der in Fig. 2a ... 2d dargestellten Verfahrensschritte besteht eine dazugehörige Anordnung gemäß Fig. 4 aus einer Nebenstellenanlage 6 mit einem Amtsanschluß 13 und einer Anzahl Festnetztelefone 7 sowie einem Funktelefon 9 mit einer modifizierten Ladestation 8. Die modifizierte Ladestation 8 besteht bestimmungsgemäß aus einem Netzteil 8.1 und zusätzlich aus einer einfachen Anpassungsschaltung 8.2, die im wesentlichen eine bei analogen Endgeräten übliche Gabelschaltung realisiert, und einer Anzahl Kontaktmöglichkeiten zur Verbindung von in dem Funktelefon 9 vorhandenen Anschlüssen mit der Anpassungsschaltung 8.2. Zur Entgegennahme eines am Funktelefon 9, das in der modifizierten Ladestation 8 abgelegt ist, ankommenden Rufes an einem Festnetztelefon 7 werden die folgenden am Funktelefon 9 zur Verfügung stehenden Signale und Anschlußmöglichkeiten verwendet. Das Rufsignal 9.1 dient üblicherweise beispielsweise zur Reduzierung der Lautstärke des Autoradios, ein erster Anschluß 9.2 dient zum Anschließen eines Lautsprechers oder eines Verstärkers und ein zweiter Anschluß 9.3 dient zum Anschluß eines Mikrofons. Beim Ablegen des Funktelefons 9 in die modifizierte Ladestation 8 werden nun die folgenden Verbindungen hergestellt: Das Rufsignal 9.1 wird einerseits über den Anschluß 8.3 von der Anpassungsschaltung 8.2 als Gabelumschaltesignal erkannt, andererseits wird das Rufsignal 9.1 über den Anschluß 9.4 des Funktelefons 9 als sog. "Offhook"-Signal erkannt, unterbrochene Linien in Fig. 4, das bedeutet, auch das Funktelefon 9 erkennt ein Gabelumschaltsignal (engl. offhook). Weiterhin bewirkt die Anpassungsschaltung 8.2, daß der erste Anschluß 9.2 des Funktelefons 9 für Lautsprecher/Verstärker mit dem Mikrofon-Anschluß 8.4 und der zweite Anschluß 9.3 des Funktelefons 9 für das Mikrofon mit dem Lautsprecher-Anschluß 8.5 der modifizierten Ladestation 8 verbunden wird. Durch das Rufsignal 9.1 kann nun über die Anpassungsschaltung 8.2 ein Sammelruf an weitere Nebenstellen erzeugt werden oder es wird durch eine direkte Leitung, eine sog. Hotline, ein Anschluß zu weiteren Nebenstellen hergestellt. Damit ist dann über die Mikrofon-Lautsprecher Anschlüsse ein bidirektionaler Informationsaustausch von einem Festnetztelefon 7 möglich, wenn der Ruf ursprünglich dem Funktelefon 9 galt.

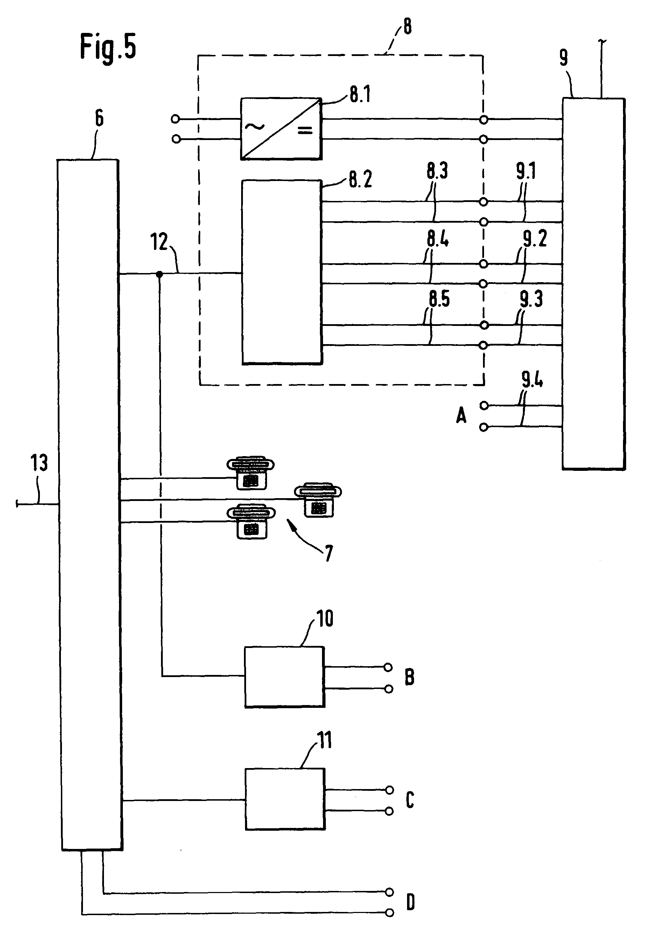

Gemäß Fig. 5 kann die Anordnung mit modifizierter Ladestation 8 gegebenenfalls erweitert werden durch einen Mehrfrequenzwahl-Detektor 10 und ein digital arbeitendes Fernsprechendgerät 11, wie ein ISDN-Endgerät oder ein DECT-Endgerät, sowie durch Verbindungsmöglichkeiten vom Anschluß A zu einem der Anschlüsse B, C oder D. Diese Verbindungsmöglichkeiten werden jeweils durch die modifizierte Ladestation 8, insbesondere durch die Anpassungsschaltung 8.2 realisiert. Zur Erweiterung der Funktionen der modifizierten Ladestation 8 wird der dritte Anschluß 9.4 des Funktelefons 9 verwendet, über den bestimmungsgemäß ein Signal Handapparat abheben, gesendet wird, beispielsweise um ein Gespräch im Auto durch einen Tastendruck am Lenkrad entgegenzunehmen. Für die Übermittlung des Offhook-Signals von der Nebenstellenanlage 6 zu dem Funktelefon 9 gibt es mehrere Möglichkeiten. Mit der Verbindung D-A, siehe Fig. 5, wird das Offhook-Signal direkt von der Nebenstellenanlage 6 über einen bestimmungsgemäßen Anschluß dem Funktelefon 9 übermittelt. Falls ein digitales Fernsprechendgerät 11 mit der Nebenstellenanlage 6 verbunden ist, kann von diesem durch die Signalisierung der Anrufannahme des B-Teilnehmers über die Verbindung C-A, siehe Fig. 5, das Offhook-Signal erzeugt werden.

Eine weitere Schaltungsvariante ergibt sich durch den Einsatz des Mehrfrequenzwahl-Detektors 10. In der zu Fig. 4 beschriebenen Grundvariante wird, ausgelöst durch einen Ruf, das Funktelefon 9 über die modifizierte Ladestation 8 und die a/b Leitung 12 mit der Nebenstellenanlage 6 verbunden, so daß der Anrufer das Rufsignal der Nebenstellenanlage 6 hört. Nimmt ein Festnetzteilnehmer nun den Ruf entgegen, so ist die Verbindung zwischen Anrufer und Festnetztelefon 7 hergestellt. Der Nachteil bei diesem Vorgang besteht darin, daß der Anrufer bereits mit einem Entgelt belastet wird, wenn die Verbindung zur Nebenstellenanlage 6 hergestellt ist, das bedeutet, der Anrufer wird belastet, ohne daß eine Gesprächsverbindung mit einem Festnetzteilnehmer zustande gekommen ist. Um diesen Zustand auszuschließen, wird verhindert, daß am Funktelefon 9 sofort mit dem Ruf das offhook-Signal ausgelöst wird, die in Fig. 4 als unterbrochene Linie dargestellte Verbindung zwischen den Anschlüssen 9.1 und 9.4 besteht dann nicht. In diesem Fall wird zwar, wie zuvor beschrieben, ein Ruf an einem Festnetztelefon 7 erzeugt, es fehlt jedoch die durchgeschaltete Verbindung zwischen Funktelefon 9 und Festnetztelefon 7. Diese Verbindung muß jedoch hergestellt werden, wenn ein Festnetzteilnehmer den Gesprächswunsch annimmt. Technisch bedeutet das, daß das offhook-Signal für das Funktelefon 9 erzeugt werden muß. Dazu dient nun der Mehrfrequenzwahl-Detektor 10, der mit dem Funktelefon 9 verbunden ist, siehe Fig. 5, Verbindung B-A. Mit dem Mehrfrequenzwahl-Detektor 11 wird die a/b-Leitung 12 zwischen modifizierter Ladestation 8 und Nebenstellenanlage 6 überwacht. Solange Frequenzen der Mehrfrequenzwahlsignale erkannt werden, wird kein offhook-Signal am Funktelefon 9 erzeugt. Bei längerer Pause oder bei Gesprächsbeginn wird das offhook-Signal erzeugt und die Durchschaltung vom Funktelefon 9 über die modifizierte Ladestation 8 und die a/b-Leitung 12 zur Nebenstellenanlage 6 erfolgt. Damit wird der Vorteil erzielt, daß der Anrufende erst dann mit einem Entgelt belastet wird, wenn der Gesprächswunsch am Festnetztelefon 7 vom Teilnehmer entgegengenommen wird.

Es ist möglich, gemäß Fig. 4, die Datenleitung 9.5 des Funktelefons 9 zu benutzen, um von einem Festnetztelefon 7 über das Funktelefon 9 eine Verbindung aufzubauen. Das ist von Vorteil, wenn die Entgelte für eine Verbindung innerhalb der Funknetze geringer sind als die von einem Festnetz zu einem Funknetz.

Gemäß der Erfindung wird ein Verfahren angegeben, mit dem auf einfache Weise beim Ablegen eines Funktelefons in einer Ladestation eine automatische Rufumleitung eines für das Funktelefon bestimmten Rufes auf ein Festnetztelefon erfolgt. Das kann im einfachsten Fall eine Rufumleitung von einem Funktelefon zu einem Festnetztelefon bei einem einfachen Privatanschluß sein oder es kann eine Rufumleitung innerhalb einer Nebenstellenanlage sein. In keinem Fall ist ein Eingriff in das Funktelefon notwendig, es können handelsübliche Funktelefone verwendet werden. Lediglich eine kostengünstige Modifikation der Ladestation, so wie sie erfindungsgemäß in den Anordnungen beschrieben ist, ist erforderlich.

## Patentansprüche

1. Verfahren zur Rufumleitung eines für ein Funktelefon (4, 9) bestimmten Rufes auf ein Festnetztelefon (3, 7),
**dadurch gekennzeichnet, daß**
beim Ablegen des Funktelefons (4, 9) in eine diesem zugeordnete Ladestation (5, 8) ein Rufumleitungsvorgang derart vorbereitet wird, daß bei einem am Funktelefon (4, 9) eintreffenden Ruf dieser Ruf automatisch an ein Festnetztelefon umgeleitet wird.

2. Verfahren nach Anspruch 1, dadurch gekennzeichnet, daß beim Ablegen des Funktelefons (4) in der Ladestation (5) durch Detektion eines Ladestromes (7) mittels einer Logikschaltung (5.2) der Dienst Rufumleitung an mindestens ein bestimmtes Festnetztelefon (3) aktiviert wird.

3. Verfahren nach Anspruch 1, dadurch gekennzeichnet, daß bei Entfernen des Funktelefons (4) aus der Ladestation (5) mittels eines durch das Entfernen des Funktelefons (4) aus der Ladestation (5) betätigten Kontaktes der Logikschaltung (5.2) ein Signal zugeführt wird, mit dem der Dienst Rufumleitung deaktiviert wird.

4. Verfahren nach Anspruch 1, dadurch gekennzeichnet, daß beim Ablegen des Funktelefons (9) in der Ladestation (8) eine Verbindung von einer der Ladestation (8) zugeordneten Anpassungsschaltung (8.2) zu dem Funktelefon hergestellt wird und daß bei Eintreffen eines Rufsignals an dem Funktelefon (9) das Rufsignal mit Hilfe der Anpassungsschaltung in einen Ruf für mindestens ein an einer Nebenstellenanlage (6) angeschlossenes Festnetztelefon (7) umgewandelt wird.

5. Schaltungsanordnung zur Durchführung des Verfahrens, bei dem ein Funktelefon(4, 9) in einer Ladestation (5, 8) abgelegt wird, dadurch gekennzeichnet, daß die Ladestation (5, 8) zusätzlich zu der bestimmungsgemäßen Verbindung von einem Netzteil (5.1, 8.1) zu einem Akkumulator im Funktelefon (4, 9) über eine Kontaktanordnung mit mindestens einem Signalanschluß (4.1, 9.1, 9.2, 9.3) des Funktelefons (4, 9) verbunden ist.

6. Schaltungsanordnung nach Anspruch 5, dadurch gekennzeichnet, daß das Funktelefon (4) über seine Datenleitung (4.1) mit einer der Ladestation (5) zugeordneten Logikschaltung (5.2) verbunden ist und daß ein durch die Ablage des Funktelefons(4) in der Ladestation (5) betätigter Kontakt mit der Logikschaltung (5.2) verbunden ist.

7. Schaltungsanordnung nach Anspruch 5, dadurch gekennzeichnet, daß das Funktelefon (4) über seine Rufsignalleitung (9.1), über seine Lautsprecher-Verstärker-Leitung (9.2) und über seine Mikrofonanschluß-Leitung (9.3) mit einer Anpassungsschaltung (8.2) verbunden ist.
